# EUROPÄISCHE PATENTSCHRIFT

(11) **EP 1 155 800 B1**
(45) Veröffentlichungstag und Bekanntmachung des Hinweises auf die Patenterteilung: **18.10.2006**
(21) Anmeldenummer: 01111759.5
(22) Anmeldetag: 15.05.2001
(51) Int. Cl.: B29C 44/08, B29C 44/58

(54) **Vorrichtung zur Herstellung eines mehrlagigen Schaumstoff-Polsterkörpers**
Apparatus for making multilayered foamed upholstery articles
Appareil pour la production des élément capitonné en mousse

(30) Priorität: 17.05.2000 DE 10023901
(43) Veröffentlichungstag der Anmeldung: 21.11.2001
(73) Patentinhaber: GRAMMER Automotive GmbH, 92224 Amberg (DE)
(72) Erfinder: Pausch, Friedhelm, 42697 Sollngen (DE)
(74) Vertreter: Ostriga, Sonnet, Wirths & Roche

(56) Entgegenhaltungen:
- DE-A- 1 920 111
- DE-A- 19 704 623
- US-A- 4 043 725

## Beschreibung

Von DE 43 00 375 A1 ist es entsprechend dem Oberbegriff des Anspruchs 1 bekannt, ein aus einem Schaumstoff bestehendes Sitzpolster herzustellen. Dabei wird ein Grundformelement einer Schäumform in zwei Füllphasen zunächst mit einer Schaumlage einer ersten Charakteristik und sodann mit einer zweiten Schaumlage einer zweiten Charakteristik gefüllt. Den beiden Füllphasen entsprechend, sind am Grundformelement zwei nacheinander alternativ einsetzbare unterschiedlich hohe Formdeckel (Gegenformelement und Zusatz-Gegenformelement) schwenkbar angeordnet

Von der DE 19 20 111 A1 ist es bekannt, zum Herstellen eines mehrschichtigen Schaumstoffkörpers entweder eine einzige oder mehrere Formen zu verwenden, die jeweils aus einem Formboden, einem Kern und/oder einem Einlegestück und einer Formhaube bestehen. Mit einer solchen Form wird stufenweise geschäumt. In der ersten Stufe wird der Schaumrohstoff für die erste Schicht in die Form eingegeben und dort zur Härte gebracht. In der nächsten Stufe wird eine Formhaube und/oder ein Formboden größerer Abmessungen verwendet. In dem dabei entstehenden Hohlraum wird der Schaumrohstoff für die nächste Schaumstoffschicht eingegeben. Auf diese Weise geht man stufenweise weiter, bis man die gewünschte Anzahl von Schaumstoffschichten mit der gewünschten Härteeinstellung durch Übereinanderschäumen oder Überschäumen erhalten hat.

Für den Fall, dass gemäß der DE 19 20 111 A1 verschiedene Schaumstoffschichten in einer einzigen Form übereinandergeschäumt werden sollen, wird der jenige Innenraum der Form, den die nächste Schaumstoffschicht einnehmen soll, mit einem Kern und/oder einem Einlegestück ausgefüllt. Beim nächsten Schäumvorgang wird dieser Kern und/oder das Einlegestück nicht mehr in die Form gesetzt oder es wird ein Kern und/oder ein Einlegestück kleinerer Abmessungen genommen, so dass Raum für die nächste Schaumstoffschicht frei wird.

Durch offenkundige Vorbenutzung ist es im Zusammenhang mit einer karussellartig aufgebauten Vorrichtung zur Herstellung von aus Schaumstoff einheitlicher Charakteristik bestehenden hohlen Polsterkörpern für Kraftfahrzeug-Kopfstützen bekannt, jeweils eine ein Formoberteil und ein Formunterteil aufweisende Werkzeugform mit einem Kern zur Abbildung des Hohlraums zu versehen. Dabei ist der Formkern entweder dem Formoberteil oder dem Formunterteil insbesondere schwenkbar zugeordnet.

Ausgehend von der eingangs erwähnten bekannten Vorrichtung zur Herstellung eines mehrlagigen Schaumstoff-Polsterkörpers gemäß der DE 43 00 375 A1, liegt der Erfindung die Aufgabe zugrunde, die bekannte Vorrichtung so auszugestalten, dass sie mit einem verhältnismäßig geringen technischen Aufwand die Herstellung von mehrlagigen Schaumstoff-Polsterkörpern gestattet, welche jeweils zumindest teilumfänglich je einen Hohlraum umgreifen, also jeweils einen Schaumstoff-Polsterhohlkörper bilden.

Diese Aufgabe wird gemeinsam mit den Merkmalen des Oberbegriffs des Anspruchs 1 dadurch gelöst, dass das Grundformelement ein Formkern ist, den das Gegenformelement mit der Grundformhöhlung zur Erzeugung eines Schaumstoff-Grundhohlkörpers mindesten teilweise umgibt, dass der den Schaumstoff-Grundhohlkörper tragende Formkern und das Zusatz-Gegenformelement relativbeweglich zueinander sind, und dass der Schaumstoff-Grundhohlkörper mittels des Formkerns in das Zusatz-Gegenformelement verbringbar ist, welches das Gegenformelement ersetzt und den vom Formkern getragenen Schaumstoff-Grundhohlkörper mit der Zusatz-Formhöhlung umgibt.

Damit bildet die Erfindung eine mindestens zwei Formelemente aufweisende Werkzeugform, welche als Grundformelement einen Formkern zur Schaffung einer den Formkern mindestens teilumfänglich umgreifenden Grundformhöhlung, vorzugsweise in dessen einer auf überwiegender Umfangslänge umgreifenden Grundformhöhlung, lösbar aufnimmt. Diese Grundformhöhlung dient der Schaffung eines Schaumstoff-Grundhohlkörpers.

Nach Entformen des nach wie vor von demselben Formkern gehaltenen Schaumstoff-Grundhohlkörpers tritt (mindestens) ein Zusatz-Gegenformelement in Aktion, welches den nach wie vor auf demselben Formkern gehaltenen Schaumstoff-Grundhohlkörper mit einer Zusatz-Formhöhlung umgibt, welche die Zusatz-Schaumstofflage aufnimmt.

In weiterer Ausgestaltung der Erfindung umgibt das Gegenformelement mit der Grundformhöhlung den Formkern auf dessen gesamter Umfangslänge.

Eine andere Variante der Erfindung besteht darin, dass das Zusatz-Gegenformelement den vom Formkern getragenen Schaumstoff-Grunclhohlkörper mit der Zusatz-Formhöhlung nur teilumfänglich umgibt.

Eine andere Ausgestaltung der Erfindung besteht darin, dass das Zusatz-Gegenformelement den vom Formkern getragenen Schaumstoff-Grundhohlkörper mit der Zusatz-Formhöhlung auf gesamter Umfangslänge umgibt.

Mit der Erfindung ist es insbesondere gelungen, eine relativ einfach aufgebaute Vorrichtung zur Herstellung eines mehrlagigen Schaumstoff-Polsterhohlkörpers zu schaffen, wobei es genügt, dem Gegenformelement und dem Zusatz-Gegenformelement im Minimalfall nur einen einzigen Formkern zuzuordnen, welcher zugleich dazu dient, den im Gegenformelement gebildeten Schaumstoff-Grundhohlkörper in das Zusatz-Gegenformelement zu verbringen.

Im übrigen kennzeichnet sich die Erfindung durch eine Transportbeweglichkeit zwischen dem den Schaumstoff-Grundhohlkörper tragenden Formkern und dem Zusatz-Gegenformelement. In diesem Zusammenhang besteht ein besonders wesentliches Erfindungsmerkmal darin, dass der Formkern den von ihm getragenen Schaumstoff-Grundhohlkörper in Ausrichtung mit dem Zusatz-Gegenformelement versetzt. Eine derartige erfindungsgemäße Vorrichtung trägt der Eigenart von Schaumstoff-Hohlkörpern Rechnung, wonach diesen im Unterschied zu einer von der DE 197 04 623 A1 bekannten Vorrichtung zur Vermeidung einer Qualitätsminderung eine relativ lange Verweilzeit auf dem Formkern ermöglicht wird.

Die Erfindung gestattet weiterhin viellagige Schaumstoff-Hohlkörper dadurch, dass dem Zusatz-Gegenformelement eine Anzahl unterschiedlicher Zusatz-Gegenformelemente nachgeordnet ist, von denen jedes zur Aufbringung einer zusätzlichen Schaumstoff-Schicht auf einen vom Formkern getragenen mehrlagigen Schaumstoff-Hohlkörper bestimmt ist.

Auch kann es in weiterer Ausgestaltung der Erfindung zweckmäßig sein, dass dem Gegenformelement und dem mindestens einen Zusatz-Gegenformelement mindestens zwei oder eine größere Anzahl von einander identischen Formkernen zugeordnet sind. Eine derartige Ausgestaltung der Vorrichtung ist dann zweckmäßig, wenn beispielsweise spezielle Schaumstoffe größere Verweilzeiten zur Erreichung ihrer Endfestigkeit benötigen, bevor sie von dem jeweiligen Formkern entformt werden.

Eine rationell arbeitende Vorrichtung beschreiben andere Merkmale entsprechend der Erfindung, wonach das Gegenformelement und das mindestens eine Zusatz-Gegenformelement, welche einander identische Formkerne enthalten, gleichzeitig mit einem Reaktiv-Schaumgemisch befüllbar sind.

Insbesondere die vorbeschriebene erfindungsgemäße Vorrichtung gestattet eine zirkulierende Anordnung, in welcher ein Gegenformelement und mindestens ein Zusatz-Gegenformelement enthalten sind, welche sämtlich einander identische, zum Gegenformelement und zu dem mindestens einen Zusatz-Gegenformelement relativbewegliche Formkerne enthalten, welche taktweise dem sich öffnenden und schließenden Gegenformelement und dem mindestens einen sich öffnenden und schließenden Zusatz-Gegenformelement zuführbar sind.

Dabei ist es entsprechend der Erfindung auch zweckmäßig, dass die Taktbewegungen in Zwischentaktbewegungen unterteilt sind, derart, dass sich die Formkerne außerhalb des Gegenformelements bzw. außerhalb des mindestens einem Zusatz-Gegenformelements befinden. Derartige Zwischentakte können hilfreich sein, um beispielsweise die Werkzeuggravur für den nächsten Schäumvorgang, z.B. durch Einsprühen mit einem Trennmittel, vorzubereiten.

Eine zirkulierende Anordnung kann entsprechend der Erfindung mit drei jeweils im Umfangswinkelabstand von 120° voneinander angeordneten Tragspeichen versehen sein, von denen jede einen mit den anderen Formkörpern identischen Formkörper trägt, wobei im Umfangswinkelabstand von 120° dem stationären Gegenformelement in Taktbewegungsrichtung das ebenfalls stationäre Zusatz-Gegenformelement unmittelbar folgt. Bei dieser besonderen Vorrichtung kann es zweckmäßig sein, die Zwischentaktbewegungen jeweils über einen Umfangswinkel von 60° durchzuführen.

Weitere Erfindungsmerkmale bestehen darin, dass das Zusatz-Gegenformelement von dem vom Formkern getragenen mehrlagigen, z.B. zweilagigen, fertigen Schaumstoff-Hohlkörper entformbar und dass der mehrlagige fertige Schaumstoff-Hohlkörper vom Formkern abnehmbar ist.

Entsprechend einer erfindungsgemäßen Ausführungsform kann der mehrlagige fertige Schaumstoff-Hohlkörper vom Formkern abgestreift werden.

Eine andere erfindungsgemäße Ausführungsform sieht zur Entformung von mehrlagigen Schaumstoff-Hohlkörpern einen als Faltkern ausgebildeten Formkern vor.

Schließlich gestattet die Erfindung eine aus mehreren zirkulierenden Anordnungen bestehende Gesamtanordnung, welche dadurch gekennzeichnet ist, dass eine Anzahl von zirkulierenden Anordnungen auf einem gemeinsamen Transportweg, insbesondere auf einem kreisförmigen karussellartigen oder auf einem linearen Transportweg, aufeinanderfolgend angeordnet sind.

Mit der erfindungsgemäßen Vorrichtung ist es möglich, Schaumstoff-Hohlkörper herzustellen, die aus mehreren Schaumstoff-Lagen bestehen, die eine unterschiedliche Charakteristik, d.h. unterschiedliche stoffliche Eigenschaften, wie z.B. hinsichtlich Stoffzusammensetzung, Härte, Raumgewicht, Farbe etc. aufweisen können, ohne dass bei der Fertigung die Basis-Prozesszeit unbedingt erhöht wird.

In den Zeichnungen sind bevorzugte Ausführungsformen entsprechend der Erfindung beispielsweise näher dargestellt, es zeigt
Fig. 1A-Fig.1C sowie Fig. 2A-2C eine schematische Darstellung, mit welcher die erfindungsgemäße Vorrichtung und die Verfahrensweise zur Herstellung eines mehrlagigen Schaumstoff-Hohlkörpers dargestellt sind,
Fig. 3 in schematischer Darstellung einen Schnitt durch einen Schaumstoff-Hohlkörper,
Fig. 4 den Schaumstoff-Hohlkörper in Ansicht,
Fig. 5 eine teilweise schematische Draufsicht auf eine industrielle Fertigungsanlage zur Herstellung von mehrlagigen Schaumstoff-Hohlkörpern und
Fig. 6 eine Schnittansicht etwa entlang der in Fig. 5 mit VI-VI bezeichneten Schnittlinie.

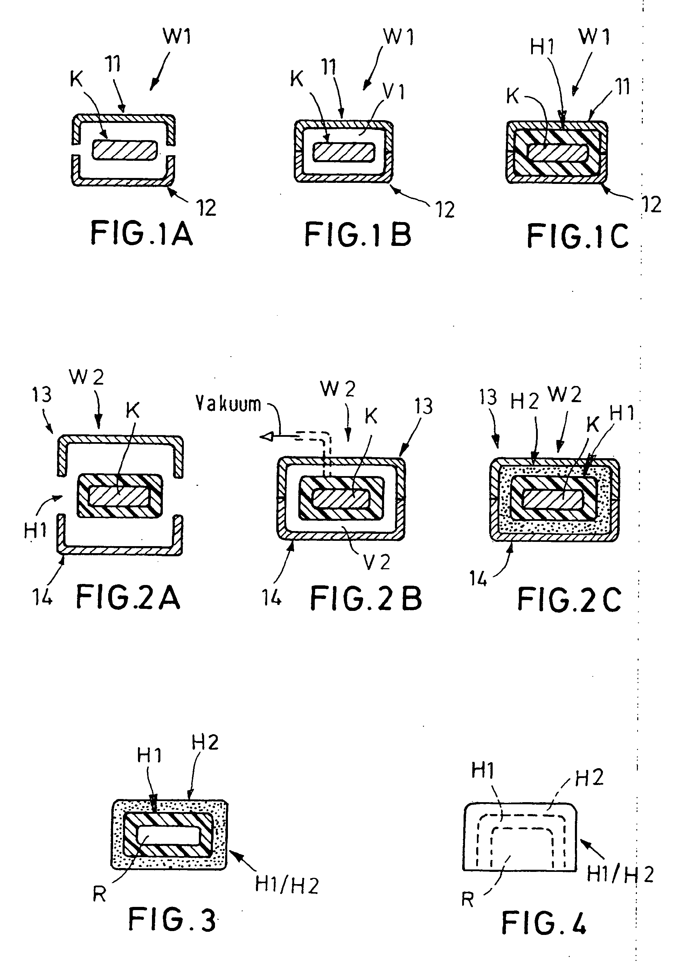

Gemäß den Fig. 1A-1C und 2A-2C ist für zwei unterschiedliche Werkzeugelemente, welche jeweils insgesamt mit W1 und W2 bezeichnet sind, jeweils ein und derselbe Formkern K vorgesehen. Jedes Werkzeugelement W1 und W2 ist zweiteilig ausgebildet und weist so eine erste und zweite Formhälfte 11, 12 bzw. 13, 14 auf.

Der Formkern K bildet ein Grundformelement, das Werkzeugelement W1 ein Gegenformelement und das Werkzeugelement W2 ein Zusatz-Gegenformelement.

Gemäß Fig. 1A ist der Formkern K soeben in das teilweise noch offene Gegenformelement W1 eingeführt worden, beispielsweise quer zur Zeichnungsebene. Gemäß Fig. 1B ist das Gegenformelement W1 geschlossen. Sobald dies der Fall ist, wird das Füllvolumen V1 mit Reaktivschaummasse so gefüllt, dass eine erste Schaumstofflage in Gestalt eines eine bestimmte Schaumcharakteristik, z.B. eine bestimmte Härte, aufweisenden Schaumstoff-Hohlkörpers H1 entsteht (Fig. 1C).

Daraufhin wird das Gegenformelement W1 in nicht dargestellter Weise geöffnet und der den Hohlkörper H1 tragende Formkern K gemäß Fig. 2A in das offene Zusatz-Gegenformelement W2 eingeführt, beispielsweise quer zur Zeichnungsebene.

Daraufhin wird das Zusatz-Gegenformelement W2 gemäß Fig. 2B geschlossen und wiederum ein Reaktivschaumgemisch anderer Charakteristik, z.B. geringerer Härte, in das Füllvolumen V2 eingefüllt. Daraufhin entsteht ein den Schaumstoff-Hohlkörper H1 umgebender Schaumstoff-Hohlkörper H2.

Anschließend wird in nicht dargestellter Weise das gemäß Fig. 2C noch geschlossene Zusatz-Gegenformelement W2 geöffnet und der auf dem Formkern K befindliche zweilagige Schaumstoff-Hohlkörper H1/H2 vom Formkern K abgestreift.

Auf diese Weise ist der beispielsweise zwei unterschiedliche Lagen aufweisende fertige Schaumstoff-Hohlkörper H1/H2 entstanden. Dieser fertige Schaumstoff-Hohlkörper H1/H2 ist noch einmal schematisch in Ansicht gemäß Fig. 4 gezeigt. Der vom Formkern befreite Hohlraum des Hohlkörpers H1/H2 trägt die Bezeichnung R.

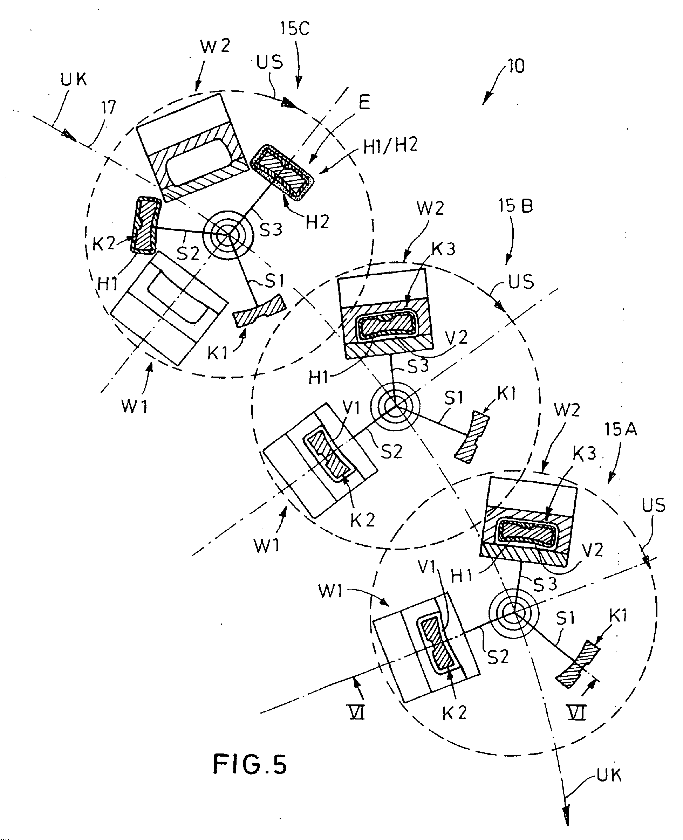

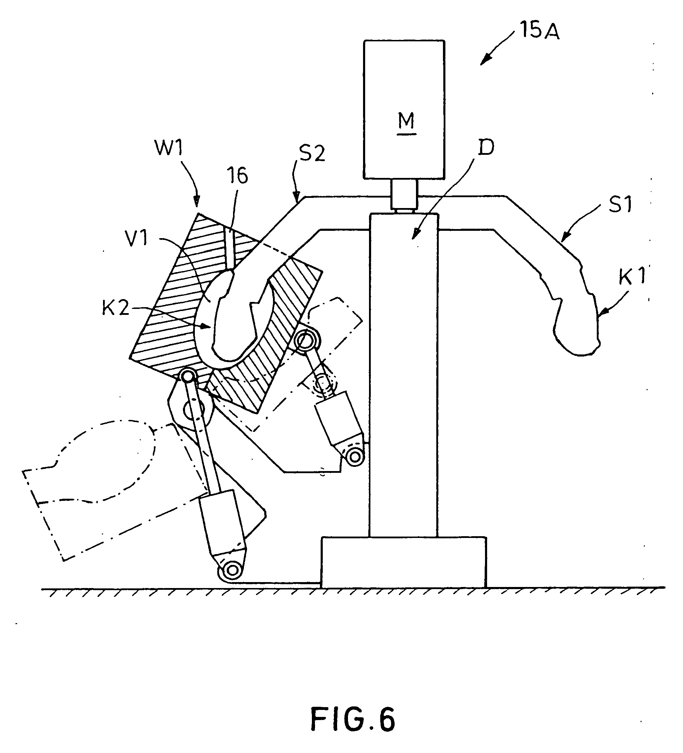

Fig. 5 zeigt einen einen Sektor einer karussellartig aufgebauten, industriellen Fertigungsanlage zur Herstellung mehrlagiger Schaumstoff-Hohlkörper. Die insgesamt mit 10 bezeichnete Vorrichtung gemäß Fig. 5 besteht aus einer größeren Anzahl von Teilvorrichtungen, die jeweils etwa speichenförmig gruppiert aufgebaut und im vorliegenden Falle mit 15A-15C bezeichnet sind. Sinngemäß sind die einzeln dargestellten Teilvorrichtungen gemäß Fig. 6 mit 15A bezeichnet.

Jede Speichenanordnung S1-S3 vollführt eine taktweise angetriebene Bewegung um die jeweilige Drehachse D in Drehrichtung US aus. Auch die gesamte Karussell-Vorrichtung 10 wird taktweise drehangetrieben, und zwar in Drehrichtung UK.

Am Beispiel der Teilvorrichtung 15A soll nun im Zusammenhang mit Fig. 6 der Fertigungsablauf bei einem zweilagigen Schaumstoff-Hohlkörper H1/H2 dargelegt werden:

An den tragarmartigen Speichen S1-S3 sind Formkerne K1-K3 angeordnet. Der Formkern K1 ist unbesetzt und kann deshalb "gepflegt", z.B. mit Formtrennmittel versehen werden. Der Formkern K2 befindet sich in dem geschlossenen Gegenformelement W1, welches der Verdeutlichung halber in Fig. 6 auch in aufgeklappter, d.h. geöffneter, Position dargestellt ist.

Der Formkern K2, welcher im übrigen eine mit den Formkernen K1 und K3 identische Form und Größe aufweist, ist von einem Füllvolumen V1 umgeben. Durch einen Füllkanal 16 wird sodann Reaktivschaumgemisch in das Füllvolumen V1 eingegeben, derart, dass der Schaumstoff-Hohlkörper H1 entsteht.

In der Teilvorrichtung 15A ist der Schaumstoff-Hohlkörper H1 innerhalb des Zusatz-Gegenformelements W2 dargestellt, welches ein größeres Füllvolumen V2 aufweist, das den Hohlkörper H1, welcher von dem Kern K3 getragen wird, mit umfangsseitigen Abstand umgibt. Auf diese Weise kann, bedingt durch das Füllvolumen V2, der Hohlkörper H2 durch Einfüllen eines Reaktivgemisches anderer Charakteristik entstehen. Dieser Hohlkörper H2, der im Zusammenhang mit der Teilvorrichtung 15C dargestellt ist, stellt die äußere Lage bzw. Schicht des zweilagigen Hohlkörpers H1/H2 dar.

Im Zusammenhang mit der Teilvorrichtung 15C wird auch deutlich, dass der bei einem Weitertakten der Formkerne K1-K3 innerhalb der Teilvorrichtung zurückgelegte Umfangswinkel 60° beträgt. Auf diese Weise gewährt man den Schaumstoff-Hohlkörpern H1 und H2 jeweils eine gewisse prozessbedingte Ruhezeit. Zudem muss ergänzt werden, dass sämtliche Teilvorrichtungen, von denen nur die Teilvorrichtungen 15A-15C dargestellt sind, baugleich sind, und auf dem großen Kreis 17 in Richtung UK umlaufen.

Die für die gesamte Vorrichtung 10 vorgesehene Entnahmestelle, bei welcher der jeweils fertige zweilagige Schaumstoff-Hohlkörper H1/H2 entnommen wird, ist in Fig. 5 mit E bezeichnet.

Die in Fig. 5 gezeigte Vorrichtung 10 zur Erzeugung eines zweilagigen Schaumstoff-Hohlkörpers H1/H2 ist so gesteuert, dass jeder Hohlkörper H1/H2 einer jeden Teilvorrichtung, z.B. auch der Teilvorrichtung 15A-15C, nach jedem Umlauf in Richtung UK entlang dem großen Kreis 17 an die Entnahmestelle E gelangt. Dem geht bei Prozessbeginn ein notwendiger toter Umlauf voraus, bei dem die jeweiligen Formkerne K2 und K3 zunächst mit den Hohlkörpern H1 versehen werden.

Als Besonderheit ist noch festzustellen, dass die Formkerne K1-K3 an den Speichen S1-S3 in freihängender Anordnung vorgesehen sind, um ein leichtgängiges Abstreifen der fertigen Hohlkörper H1/H2 zu gewährleisten.

Bezüglich Fig. 2B ist nachzutragen, dass gegebenenfalls der das Füllvolumen V2 bildende Raum kurzzeitig mit einer Vakuumquelle verbunden oder eine Komponente des Reaktivschaumgemisches, insbesondere der Polyolbestandteil, mit Gas (z.B. mit CO₂) beladen werden kann. Hierdurch wird der Füllvorgang, insbesondere bei einer dünnen Schaumlage, verbessert.

Der zweilagige Hohlkörper H1/H2 kann z.B. einen Polsterkörper für eine Kfz-Kopfstütze darstellen, die ergonomischen und sicherheitlichen Bedürfnissen besonders Rechnung trägt. So kann beispielsweise die innere Schaumstofflage H1 härter ausgebildet sein und gegebenenfalls bei einem Crash einen gewissen Energieverzehr bewirken, während die weichere äußere Schaumstofflage H2 für eine anlehnsympathische Kopfstütze sorgt.

## Patentansprüche

1. Vorrichtung (10) zur Herstellung eines mehrlagigen Schaumstoff-Polsterkörpers (H1/H2), insbesondere für Kraftfahrzeug-Polsterteile, mit einer mehrere Werkzeug-Formelemente (W1, W2) aufweisenden Werkzeugform, wobei zwischen einem Grundformelement (K) und einem zumindest einteiligen Gegenformelement (W1) eine Formhöhlung (V1) zur Erzeugung eines Schaumstoff-Grund-hohl-körpers (H1) und zwischen dem vom Grundformelement (K) aufgenommenen Schaumstoff-Grundhohlkörper (H1) und einem das Gegenformelement (W1) ersetzenden mindestens einteiligen Zusatz-Gegenformelement (W 2) eine Zusatz-Formhöhlung (V2) zur Erzeugung einer Zusatz-Schaumstofflage (H2) gebildet ist, **dadurch gekennzeichnet, dass** das Grundformelement ein Formkern (K) ist, den das Gegenformelement (W1) mit der Grundformhöhlung (V1) zur Erzeugung eines Schaumstoff-Grundhohlkörpers (H1) mindestens teilweise umgibt, dass der den Schaumstoff-Grundhohlkörper (H1) tragende Formkern (K) und das Zusatz-Gegenformelement (W2) relativbeweglich zueinander sind, und dass der Schaumstoff-Grundhohlkörper (H1) mittels des Formkerns (K) in das Zusatz-Gegenformelement (W2) verbringbar ist, welches das Gegenformelement (W1) ersetzt und den vom Formkern (K) getragenen Schaumstoff-Grundhohlkörper (H1) mit der Zusatz-Formhöhlung (V2) umgibt.

2. Vorrichtung nach Anspruch 1, **dadurch gekennzeichnet, dass** das Gegenformelement (W1) mit der Grundformhöhlung (V1) den Formkern (K) auf dessen gesamter Umfangslänge umgibt.

3. Vorrichtung nach Anspruch 1 oder nach Anspruch 2, **dadurch gekennzeichnet, dass** das Zusatz-Gegenformelement (W2) den von Formkern (K) getragenen Schaumstoff-Grundhohlkörper (H1) mit der Zusatz-Formhöhlung (V2) nur teilumfänglich umgibt.

4. Vorrichtung nach Anspruch 3, **dadurch gekennzeichnet, dass** das Zusatz-Gegenformelement (W2) den vom Formkern (K) getragenen Schaumstoff-Grundhohlkörper (H1) mit der Zusatz-Formhöhlung (V2) auf gesamter Umfangslänge umgibt.

5. Vorrichtung nach einem der Ansprüche 1 bis 4, **gekennzeichnet durch** eine Transportbeweglichkeit zwischen dem den Schaumstoff-Grundhohlkörper (H1) tragenden Formkern (K) und dem Zusatz-Gegenformelement (W2).

6. Vorrichtung nach Anspruch 5, **dadurch gekennzeichnet, dass** der Formkern (K) den von ihm getragenen Schaumstoff-Grundhohlkörper (H1) in Ausrichtung mit dem Zusatz-Gegenformelement (W2) versetzt.

7. Vorrichtung nach einem der Ansprüche 1 bis 6, **dadurch gekennzeichnet, dass** dem Zusatz-Gegenformelement (W2) eine Anzahl unterschiedlicher Zusatz-Gegenformelemente nachgeordnet ist, von denen jedes zur Aufbringung einer zusätzlichen Schaumstoff-Schicht auf einen vom Formkern (K) getragenen mehrlagigen Schaumstoff-Hohlkörper (H1/H2) bestimmt ist.

8. Vorrichtung nach Anspruch 7, **dadurch gekennzeichnet, dass** dem Gegenformelement (W1) und dem mindesten einen Zusatz-Gegenformelement (W2) mindestens zwei oder eine größere Anzahl von einander identischen Formkernen (K1-K3) zugeordnet sind.

9. Vorrichtung nach Anspruch 7 oder nach Anspruch 8, **dadurch gekennzeichnet, dass** das Gegenformelement (W1) und das mindestens eine Zusatz-Gegenformelement (W2), welche einander identische Formkerne (K2, K3) enthalten, gleichzeitig mit einem Reaktiv-Schaumgemisch befüllbar sind.

10. Vorrichtung nach einem der Ansprüche 5 bis 9, **gekennzeichnet durch** eine zirkulierende Anordnung (15A-15C), in welcher ein Gegenformelement (W1) und mindestens ein Zusatz-Gegenformelement (W2) enthalten sind, welche sämtlich einander identische, zum Gegenformelement (W1) und zu dem mindestens einen Zusatz-Gegenformelement (W2) relativbewegliche Formkerne (K2, K3) enthalten, welche taktweise dem sich öffnenden und schließenden Gegenformelement (W1) und dem mindestens einen sich öffnenden und schließenden Zusatz-Gegenformelement (W2) zuführbar sind.

11. Vorrichtung nach Anspruch 10, **dadurch gekennzeichnet, dass** die Taktbewegungen in Zwischentaktbewegungen unterteilt sind, derart, dass sich die Formkerne (K1-K3) außerhalb des Gegenformelements (W1) bzw. außerhalb des mindestens einen Zusatz-Gegenformelements (W2) befinden.

12. Vorrichtung nach Anspruch 10 oder nach Anspruch 11, **gekennzeichnet durch** eine zirkulierende Anordnung (15A-15C) mit jeweils drei im Umfangswinkelabstand von 120 ° voneinander angeordneten Tragspeichen (S1-S3), von denen jede einen mit den anderen Formkörpern (z.B. K1-K2) identischen Formkörper (z.B. K3) trägt, wobei im Umfangswinkelabstand von 120° dem stationären Gegenformelement (W1) in Taktbewegungsdrehrichtung das ebenfalls stationäre Zusatz-Gegenformelement (W2) unmittelbar folgt.

13. Vorrichtung nach einem der Ansprüche 1 bis 12, **dadurch gekennzeichnet, dass** das Zusatz-Gegenformelement (W2) von dem vom Formkern (K) getragenen mehrlagigen, z. B. zweilagigen, fertigen Schaumstoff-Hohlkörper (H1/H2) entformbar und dass der mehrlagige fertige Schaumstoff-Hohlkörper (H1/H2) vom Formkern (K) abnehmbar ist.

14. Vorrichtung nach Anspruch 13, **dadurch gekennzeichnet, dass** der mehrlagige fertige Schaumstoff-Hohlkörper (H1/H2) vom Formkern (K) abstreifbar ist.

15. Vorrichtung nach Anspruch 13, **dadurch gekennzeichnet, dass** der mehrlagige fertige Schaumstoff-Hohlkörper (H1/H2) von dem als Faltkern ausgebildeten Formkern (K) abnehmbar ist.

16. Vorrichtung nach einem der Ansprüche 7 bis 15, **dadurch gekennzeichnet, dass** eine Anzahl von zirkulierenden Anordnungen (15A-15C) auf einem gemeinsamen Transportweg, insbesondere auf einem kreisförmigen karussellartigen (17) oder auf einem linearen Transportweg, aufeinanderfolgend angeordnet sind.

## Claims

1. Device (10) for the manufacture of a multiple-layer foam cushion body (H1/H2), in particular for vehicle cushion parts, having a mould which has a plurality of mould elements (W1, W2), there being formed between a base mould element (K) and an at least one-part counter-mould element (W1) a mould cavity (V1) for the production of a base hollow foam body (H1), and there being formed between the base hollow foam body (H1) received by the base mould element (K) and an at least one-part additional counter-mould element (W2) which replaces the counter-mould element (W1) an additional mould cavity (V2) for producing an additional foam layer (H2), **characterised in that** the base mould element is a mould core (K) which is at least partly surrounded by the counter-mould element (W1) having the base mould cavity (V1) for producing a base hollow foam body (H1), **in that** the mould core (K) carrying the base hollow foam body (H1) and the additional counter-mould element (W2) are movable in relation to one another, and **in that** the base hollow foam body (H1) may be brought into the additional counter-mould element (W2) by means of the mould core (K), this additional counter-mould element (W2) replacing the counter-mould element (W2) and surrounding the base hollow foam body (H1) carried by the mould core (K) by means of the additional mould cavity (V2).

2. Device according to Claim 1, **characterised in that** the counter-mould element (W1) surrounds the mould core (K) over the entire length of its circumference, by means of the base mould cavity (V1).

3. Device according to Claim 1 or Claim 2, **characterised in that** the additional counter-mould element (W2) only surrounds the base hollow foam body (H1) carried by the mould core (K) over part of its circumference, by means of the additional mould cavity (V2).

4. Device according to Claim 3, **characterised in that** the additional counter-mould element (W2) surrounds the base hollow foam body (H1) carried by the mould core (K) over the entire length of its circumference, by means of the additional mould cavity (V2).

5. Device according to one of Claims 1 to 4, **characterised by** the possibility of a transporting movement between the mould core (K) carrying the base hollow foam body (H1) and the additional counter-mould element (W2).

6. Device according to Claim 5, **characterised in that** the mould core (K) moves the base hollow foam body (H1) carried thereby into alignment with the additional counter-mould element (W2).

7. Device according to one of Claims 1 to 6, **characterised in that** a number of different additional counter-mould elements are arranged downstream of the additional counter-mould element (W2), each of which is intended to apply an additional foam layer to a multiple-layer hollow foam body (H1/H2) carried by the mould core (K).

8. Device according to Claim 7, **characterised in that** at least two or a larger number of mutually identical mould cores (K1 to K3) are associated with the counter-mould element (W1) and the at least one additional counter-mould element (W2).

9. Device according to Claim 7 or Claim 8, **characterised in that** the counter-mould element (W1) and the at least one additional counter-mould element (W2) which contain mutually identical mould cores (K2, K3) may simultaneously be filled with a reactive foam mixture.

10. Device according to one of Claims 5 to 9, **characterised by** a circulating arrangement (15A to 15C) containing a counter-mould element (W1) and at least one additional counter-mould element (W2) which all contain mutually identical mould cores (K2, K3) which are movable relative to the counter-mould element (W1) and the at least one additional counter-mould element (W2) and which may be fed in pulsed manner to the opening and closing counter-mould element (W1) and the at least one opening and closing additional counter-mould element (W2).

11. Device according to Claim 10, **characterised in that** the pulsed movements are divided into intermediate pulsed movements such that the mould cores (K1 to K3) are located outside the counter-mould element (W1) or the at least one additional counter-mould element (W2).

12. Device according to Claim 10 or Claim 11, **characterised by** a circulating arrangement (15A to 15C) having in each case three carrying spokes (S1 to S3) arranged spaced from one another at an angle at circumference of 120°, of which each carries a mould body (e.g. K3) which is identical to the other mould bodies (e.g. K1 to K2), with the stationary counter-mould element (W1) followed, in the direction of the pulsed movement, at an angle at circumference of 120° by the similarly stationary additional counter-mould element (W2).

13. Device according to one of Claims 1 to 12, **characterised in that** the additional counter-mould element (W2) may be removed from the finished multiple-layer, for example two-layer, hollow foam body (H1/H2) carried by the mould core (K), and **in that** the finished multiple-layer hollow foam body (H1/H2) can be taken off the mould core (K).

14. Device according to Claim 13, **characterised in that** the finished multiple-layer hollow foam body (H1/H2) may be stripped off the mould core (K).

15. Device according to Claim 13, **characterised in that** the finished multiple-layer hollow foam body (H1/H2) can be removed from the mould core (K), which takes the form of a folding core.

16. Device according to one of Claims 7 to 15, **characterised in that** a number of circulating arrangements (15A to 15C) are arranged successively on a common transport path, in particular on a circular carousel-like (17) or linear transport path.

## Revendications

1. Dispositif (10) pour la production d'un corps capitonné en mousse (H1/H2), en particulier pour des parties capitonnées pour véhicule automobile, avec un moule-outil présentant une pluralité d'éléments de moules-outils (W1, W2), sachant qu'entre un élément de moule de fond (K) et au moins un élément de moule conjugué (W1), réalisé d'une seule pièce, est formée une cavité de moulage (V1) pour produire un corps creux de fond alvéolaire (H1) et entre le corps creux de fond alvéolaire (H1), supporté par l'élément de fond de moule (K), et au moins un élément de moule conjugué additionnel (W2) réalisé d'une seule pièce, remplaçant l'élément de moule conjugué (W1), est formée une cavité de moulage additionnelle (V2) pour produire une couche alvéolaire additionnelle (H2), **caractérisé en ce que** l'élément de moule de fond est un noyau de moulage (K), qu'entoure au moins partiellement l'élément de moule conjugué (W1) avec la cavité de moule de fond (V1), pour produire un corps creux de fond alvéolaire (H1) ; **en ce que** le noyau de moulage (K), portant le corps creux de fond alvéolaire (H1), et l'élément de moule conjugué additionnel (W2) sont mobiles l'un par rapport à l'autre, et **en ce que** le corps creux de fond alvéolaire (H1) est susceptible d'être déplacé, à l'aide du noyau de moulage (K), dans l'élément de moulage conjugué additionnel (W2) qui remplace l'élément de moulage conjugué (W1) et entoure, avec la cavité de moulage additionnelle (V2), le corps creux de fond alvéolaire (H1) porté par le noyau de moulage (K).

2. Dispositif selon la revendication 1, **caractérisé en ce que** l'élément de moulage conjugué (W1) entoure le noyau de moulage (K) sur la totalité de sa périphérie, par la cavité de moulage de fond (V1).

3. Dispositif selon la revendication 1 ou selon la revendication 2, **caractérisé en ce que** l'élément de moulage conjugué additionnel (W2) entoure le corps creux de fond alvéolaire (H1) porté par le noyau de moulage (K), uniquement sur une partie de sa périphérie, par la cavité de moulage additionnelle (V2).

4. Dispositif selon la revendication 3, **caractérisé en ce que** l'élément de moulage conjugué additionnel (W2) entoure le corps creux de fond alvéolaire (H1) porté par le noyau de moulage (K), sur l'ensemble de sa longueur périphérique, par la cavité de moulage additionnelle (V2).

5. Dispositif selon l'une des revendications 1 à 4, **caractérisé par** une mobilité de transport, entre le noyau de moulage (K), portant le corps creux de fond alvéolaire (H1), et l'élément de moulage conjugué additionnel (W2).

6. Dispositif selon la revendication 5, **caractérisé en ce que** le noyau de moulage (K) déplace le corps creux de fond alvéolaire (H1) porté par lui, en une orientation avec l'élément de moulage conjugué additionnel (W2).

7. Dispositif selon l'une des revendications 1 à 6, **caractérisé en ce que**, en aval de l'élément de moulage conjugué additionnel (W2), sont disposés une pluralité d'éléments de moulage conjugués additionnels différents, dont chacun est conçu pour application d'une couche alvéolaire supplémentaire sur un corps creux alvéolaire (H1/H2) à plusieurs couches, porté par le noyau de moulage (K).

8. Dispositif selon la revendication 7, **caractérisé en ce qu'**au moins deux noyaux de moulage (K1 à K3) identiques l'un l'autre, ou bien un nombre supérieur, sont associés à l'élément de moulage conjugué (W1) et au moins un élément de moulage conjugué additionnel (W2).

9. Dispositif selon la revendication 7 ou selon la revendication 8, **caractérisé en ce que** l'élément de moulage conjugué (W1) et le au moins un élément de moulage conjugué additionnel (W2), qui contiennent des noyaux de moulage (K2, K3) identiques l'un à l'autre, peuvent être remplis simultanément d'un mélange de mousse réactive.

10. Dispositif selon l'une des revendications 5 à 9, **caractérisé par** un dispositif circulant (15A à 15C), dans lequel sont contenus un élément de moulage conjugué (W1) et au moins un élément de moulage additionnel (W2), qui contiennent l'ensemble des noyaux de moulage (K2, K3) identiques les uns aux autres, ayant une mobilité relative de déplacement par rapport à l'élément de moulage conjugué (W1), et au moins un élément de moulage conjugué additionnel (W2), les noyaux de moulage pouvant être amenés de façon cadencée à l'élément de moulage conjugué (W1), qui s'ouvre et se ferme, et au moins un élément de moulage conjugué additionnel (W2) s'ouvrant et se fermant.

11. Dispositif selon la revendication 10, **caractérisé en ce que** les déplacements cadencés sont subdivisés en des déplacements à cadence intermédiaire, de manière que les noyaux de moulage (K1 à K3) se trouvent à l'extérieur de l'élément de moulage conjugué (W1), ou à l'extérieur du au moins un élément de moulage conjugué additionnel (W2).

12. Dispositif selon la revendication 10 ou selon la revendication 11, **caractérisé par** un agencement circulant (15A à 15C), avec chaque fois trois rayons supports (S1 à S3) disposés sous un espacement angulaire en périphérie de 120° les uns par rapport aux autres, dont chacun porte un corps de moulage (par exemple K3) identique aux autres corps de moulage (par exemple K1-K2), sachant que, sous un espacement angulaire périphérique de 120°, l'élément de moulage conjugué additionnel (W2), également stationnaire, suit directement l'élément de moulage conjugué (W1) stationnaire, en observant dans le sens de rotation du déplacement cadencé.

13. Dispositif selon l'une des revendications 1 à 12, **caractérisé en ce que** l'élément de moulage conjugué additionnel (W2) est démoulable du corps creux alvéolaire (H1/H2) à plusieurs couches, par exemple à deux couches, achevé, porté par le noyau de moulage (K), et **en ce que** le corps creux alvéolaire (H1/H2) à plusieurs couches achevé est démoulable du noyau de moulage (K).

14. Dispositif selon la revendication 13, **caractérisé en ce que** le corps creux alvéolaire (H1/H2) à plusieurs couches achevé est susceptible d'être enlevé du noyau de moulage (K), par raclage.

15. Dispositif selon la revendication 13, **caractérisé en ce que** le corps creux alvéolaire (H1/H2) à plusieurs couches achevé est susceptible d'être enlevé du noyau de moulage (K), réalisé sous la forme d'un noyau pliant.

16. Dispositif selon l'une des revendications 7 à 15, **caractérisé en ce qu'**une pluralité d'agencements (15A à 15C) circulant sont disposés, les uns à la suite des autres, sur un chemin de transport commun, en particulier sur un chemin de transport circulaire du genre d'un carrousel (17), ou bien sur un chemin de transport linéaire.
